# EUROPÄISCHE PATENTANMELDUNG

(11) **EP 0 685 303 A2**
(43) Veröffentlichungstag der Anmeldung: **06.12.1995**
(21) Anmeldenummer: 95106765.1
(22) Anmeldetag: 05.05.1995
(51) Int. Cl.: B26D 3/10, B26D 7/18

(54) **Vorrichtung zum Ausschneiden von Restteilen aus Randbereichen teilweise plattenförmiger Werkstücke**

(30) Priorität: 26.05.1994 DE 4418334
(71) Anmelder: Tetra Laval Holdings & Finance SA, 1009 Pully (CH)
(72) Erfinder: Reil, Wilhelm, D-64625 Bensheim (DE); Liebram, Udo, D-64319 Pfungstadt (DE); Sattler, Peter, D-64673 Zwingenberg (DE)
(74) Vertreter: Weber, Dieter, Dr.

(57) **Zusammenfassung**

Die Vorrichtung zum Ausschneiden und Sammeln von Restteilen aus Randbereichen thermogeformter Packungen (30) aus Kunststoff weist ein Schneidmesser (3) auf, welches an einer Halterung (4, 5) angebracht ist und durch Antriebsmittel antreibbar ist. Außerdem sind ein Loch (9), eine Leitung mit Krümmer (20) und ein Sammelbehälter (21) zum Sammeln und Abführen der ausgeschnittenen Restteile vorgesehen.

Damit die Randbereiche der Verpackung mit einer bestimmten Kontur beschnitten werden kann und die entstehenden Restteile sogleich gesammelt und abgeführt werden können, ist erfindungsgemäß vorgesehen, daß in der Höhlung eines als stationäres Außenmesser wirkenden Gehäuses ein um eine Achse (14) drehbares Innenmesser (3) mit zwei auf diametral gegenüberliegenden Seiten angebrachten muldenförmigen Aussparungen angeordnet ist, daß das Schnittgehäuse auf seiner einen Seite einen nach außen offenen und in Richtung der Achse (14) geradlinig verlaufenden Schlitz (unten) und auf der gegenüberliegenden Seite (oben) ein Loch (9) aufweist, wobei das Loch (9) und der Schlitz mit der Höhlung in Verbindung stehen.

## Beschreibung

Die Erfindung betrifft eine Vorrichtung zum Ausschneiden und Sammeln von Restteilen aus Randbereichen wenigstens teilweise plattenförmiger Werkstücke, vorzugsweise thermogeformter Packungen aus Kunststoff, mit einem an einer Halterung angebrachten, durch Antriebsmittel antreibbaren Schneidmesser und mit Einrichtungen zum Sammeln und Abführen der ausgeschnittenen Restteile.

Es ist bereits vorgeschlagen worden, aus thermoformbarem Kunststoff in Gestalt etwa 1,2 mm dicker Kunststoffplatten Halbschalen derart tiefzuziehen, daß zwei Halbschalen gegeneinandergesetzt und längs ihrer Ränder durch Verkleben und Verschweißen flüssigkeitsdicht verbunden werden. Auf diese Weise kann eine oder können mehrere Verpackungen gleichzeitig hergestellt werden, die jeweils zuvor aus plattenförmigen Zuschnitten thermogeformt wurden, wobei vorzugsweise nur an den Ecken und im Bereich der Ausgießöffnung Restteile in Gestalt kleiner Dreiecke, kleiner Trapeze oder ähnliche Form abzuschneiden sind, während im Bodenbereich und längs der Seitenkanten der Packung keine Überstände auszuschneiden sind.

Gleichwohl ist es schwierig, je nach der Kontur der Oberwand der Packung, insbesondere im Bereich der Ausgießöffnung, anfallende Restteile abzuschneiden, ohne einerseits zu komplizierte Werkzeuge verwenden zu müssen und andererseits die Packung zu beschädigen. Im Zuge der Rationalisierung und Leistungssteigerung von Packungsmaschinen hat man sogar versucht, eine Reihe von Packungen gleichzeitig zu formen, wobei dann Restteile an der gesamten Reihe dieser Packungen abzuschneiden sind. Diese Restteile befinden sich im Bereich einer mittleren Naht und haben die doppelte Dicke des ursprünglichen Kunststoffzuschnittes, der 1 mm oder z.B. 1,2 mm dick sein kann, so daß die Dicke der flachen bzw. plattenförmigen Restteile 2 mm oder z.B. 2,4 mm beträgt. Es versteht sich, daß die Ausschneide- oder Stanzkräfte nicht unerheblich sind und sich bei einer leistungsstarken Packungsmaschine vervielfachen, wenn das Vielfache von Packungen gleichzeitig geformt und geschnitten werden soll.

Außerdem ergab sich häufig das Problem, abgeschnittene Restteile so zu sammeln und nach dem Ausschneiden von dem Produkt, der Packung, abzuführen, daß kein Stück in eine offene Verpackung fällt. Das Problem ist besonders dann relevant, wenn die abzuschneidenden Restteile voneinander getrennt als kleinere Stücke anfallen.

Aufgabe der vorliegenden Erfindung ist es daher, eine Vorrichtung mit den Merkmalen der eingangs genannten Art zu schaffen, mit deren Hilfe die Randbereiche eines Werkstückes mit einer bestimmten Kontur beschnitten werden und die entstehenden Restteile sogleich gesammelt und abgeführt werden können.

Gemäß der Erfindung wird diese Aufgabe dadurch gelöst, daß in der Höhlung eines als stationäres Außenmesser wirkenden Schnittgehäuses ein um eine Achse drehbares Innenmesser mit zwei auf diametral gegenüberliegenden Seiten angebrachten muldenförmigen Aussparungen angeordnet ist, daß das Schnittgehäuse auf seiner einen Seite einen nach außen offenen und in Richtung der Achse geradlinig verlaufenden Schlitz und auf der gegenüberliegenden Seite ein Loch aufweist und daß das Loch und der Schlitz mit der Höhlung in Verbindung stehen. Mit einer solchen Vorrichtung können die im Randbereich eines Werkstückes, vorzugsweise einer Flüssigkeitspackung aus Kunststoff, stehengebliebenen Restteile mit jeder gewünschten Kontur ausgeschnitten, gesammelt und sogleich abgeführt werden. Dieses Abschneiden nach einer bestimmten Kontur gelingt mit der erfindungsgemäßen Vorrichtung sogar, wenn eine Reihe von noch miteinander verbundenen Werkstücken, z.B. Kunststoffpackungen, hergestellt und dem Stanzvorgang der erfindungsgemäßen Maschine unterworfen werden.

Wie bei einer Schere werden zum Ausschneiden oder Ausstanzen der Restteile im Randbereich der Packung ein Innenmesser und ein Außenmesser so zueinander bewegt, daß Scherkräfte für ein Abtrennen der Restteile an den gewünschten Stellen sorgen. Das Außenmesser ist erfindungsgemäß als stationäres Schnittgehäuse ausgebildet und weist eine Höhlung auf, in welcher das Innenmesser angeordnet ist. Um diesem die Möglichkeit einer Relativbewegung zum stationären Außenmesser zu geben, d.h. zu dem Schnittgehäuse, hat man das Innenmesser um eine Achse drehbar angeordnet, wobei die Achse das Schnittgehäuse ganz durchdringt.

Zum leichteren Verständnis und anschaulicheren Beschreibung des Erfindungsgegenstandes wird als Werkstück im folgenden beispielsweise eine Verpackung angenommen, die im Bereich ihrer Oberwand noch eine plattenförmig herausstehende Rippe aufweist. Diese Rippe erstreckt sich von der Vorderkante vor der Ausgießöffnung bis zu dieser, hinter der Ausgießöffnung bis zu einem erhabenen Teil über einer Griffmulde und von dort getrennt nochmals hinter dem erhabenen Teil bis zur Hinterkante der Packung. Man kann sich vorstellen, daß eine Packung, wenn man sie von der Seite sieht, im Bereich der Oberwand eine wellige und teilweise eckige Kontur hat, die von einer geraden Linie erheblich abweicht. Zwar kann man die erfindungsgemäße Vorrichtung zum Ausschneiden auch anderer Restteile aus anderen Randbereichen der Packung vorsehen, z.B. an den Seiten oder im Boden, die Beschreibung der Erfindung genügt aber, wenn man nur als Beispiel die Oberwand betrachtet, weil dort die Kontur manchmal am kompliziertesten ist. Hat der Fachmann eine Lehre zum günstigen Abschneiden von Restteilen an einer derart komplizierten Kontur, dann stehen ihm Mittel zum Abschneiden anderer Restteile entlang einfacher Konturen leicht zur Verfügung.

Das Innenmesser ist erfindungsgemäß rotationssymmetrisch aufgebaut, damit es um die erwähnte Achse gedreht werden kann. Innerhalb dieser rotationssymmetrischen Außenkontur des Innenmessers liegen auf zwei diametral gegenüberliegenden Seiten desselben von der äußeren Oberfläche nach innen in das Innenmesser eindringende muldenförmige Aussparungen vor, die einerseits dem Schneiden und andererseits der Aufnahme des abgeschnittenen Restteiles und Förderung an eine andere Stelle dienen. Es handelt sich um zwei Aussparungen, weil das Innenmesser für jeden Schneid- bzw. Stanzvorgang um 180° gedreht wird, wie nachfolgend noch beschrieben wird.

Auch das stationäre Schnittgehäuse hat Öffnungen auf diametral gegenüberliegenden Seiten, und zwar der nach außen offene und in Richtung der Achse geradlinig verlaufende Schlitz einerseits und ein auf der anderen Seite liegendes Loch andererseits, welches der Aufnahme und dem Abführen der Restteile dient und daher mit der Höhlung in Verbindung steht, in welcher das Innenmesser dreht und nach dem Abschneiden des betreffenden Restteiles dieses in den Bereich dieses Loches transportiert.

Zur weiteren Vereinfachung der Erläuterung und zum besseren Verständnis wird auf eine konkrete Maschine Bezug genommen, bei der beispielsweise der nach außen offene Schlitz "unten" angeordnet ist mit der Folge, daß die teilweise plattenförmige Rippe im Randbereich der Verpackung im Bereich deren Oberwand liegt, wobei die Packung von unten an das Schnittgehäuse herangeschoben und auf einer Halterung unter dem Schnittgehäuse so abgestützt wird, daß die Rippe an der Oberwand der Packung von unten in den Schlitz eingeführt wird. Auch ist dann entsprechend das erwähnte Loch im oberen Bereich der Höhlung angeordnet, so daß sich dazwischen das Innenmesser dreht, welches teilweise mit seinem Außenumfang überschneidend bzw. eingreifend in den Bereich des Loches kommt und auf der gegenüberliegenden Seite die Aussparung des Innenmessers in gewünschter Weise mit der Rippe in Eingriff kommt, um das gewünschte Ausstanzen der Restteile zu bewirken. Bei einer solchen Anordnung von "oben" und "unten" wirken die Schwerkräfte entsprechend, d.h. abgeschnittene Restteile gelangen aus dem Loch im Schnittgehäuse nach unten in einen Sammelbehälter.

Es versteht sich, daß man ein derart aufgebautes Innenmesser entweder mit entsprechender Kontur ausgestaltet oder an entsprechenden Stellen der Oberwand der zu bearbeitenden Packung mit deren Rippe so in Eingriff bringt, daß die Restteile genau in der gewünschten Tiefe und Form ausgeschnitten werden können. Durch die muldenförmigen Aussparungen im Innenmesser erfolgt im unteren Bereich das Ausschneiden der Restteile, während des Betriebes die Beförderung der separierten Restteile nach oben in das Loch, und von dort werden sie abgeführt und gesammelt, ohne daß die geringste Möglichkeit besteht, daß die ausgeschnittenen Restteile irgendwo auf den Oberboden der Verpackung fallen könnten oder etwa in die Packung hineinfallen könnten.

Günstig ist es gemäß der Erfindung ferner, wenn das Innenmesser aus wenigstens zwei in Achsrichtung hintereinander befestigten Teilen besteht, deren im Axialschnitt gesehene Außenkontur der Außenkontur des Schnittgehäuses und der der Grenzlinie der auszuschneidenden Restteile des Werkstückes entspricht. Die Achse, um welche sich das Innenmesser dreht und die auch die Höhlung des Schnittgehäuses durchdringt, wird bei dem hier betrachteten Beispiel als horizontal liegend angesehen. Durch die Anordnung und Ausgestaltung des Schlitzes im unteren Bereich des Schnittgehäuses ergibt sich ferner, daß die Achse parallel zu der teilweise auszustanzenden Rippe am Oberboden der Packung verläuft. Das in seinem Querschnitt rotationssymmetrische Innenmesser weist folglich in seinem Axialschnitt die beschriebene Außenkontur auf, welche der Grenzlinie der auszuschneidenden Restteile des Werkstückes, d.h. der Verpackung entspricht. Um die Herstellung eines solchen Innenmessers mit gegebenenfalls komplizierter Außenkontur zu vereinfachen, besteht nach dem vorstehenden Vorschlag das Innenmesser aus wenigstens zwei Teilen, die in Achsrichtung hintereinander angeordnet und aneinander befestigt sind. Auf diese Weise kann man einfach und preiswert ein Innenmesser erstellen, welches sehr wirksam auch einem komplizierten Verlauf der Außenkontur folgt. Dies hat den Vorteil, daß mit einem einzigen Vorbeidrehen der einen muldenförmigen Aussparung an der Rippe entsprechend der gewünschten Kontur alle Restteile abgeschnitten werden und in dieser muldenförmigen Aussparung gehalten werden, bis sie nach oben transportiert und in das Loch abgegeben werden. Dabei ist zu beachten, daß die Grenzlinie der muldenförmigen Aussparungen, die auf den diametral gegenüberliegenden Seiten am Innenmesser eingeformt sind, rund verlaufen, z.B. entlang dem Bogen eines Teilkreises. Durch diese runde Grenzlinie zwischen der Aussparung und dem Material des Innenmessers ergeben sich dort Kanten, die beim Überlaufen der Rippe ihre Scherwirkung entfalten, weil diese runde Kante des Innenmessers gegen die Linie im Schnittgehäuse bewegt wird, welche die Höhlung von dem Material des Schnittgehäuses trennt. Geschnitten wird also in dem Bereich unten, wo das Innenmesser seine Ausnehmung hat. Durch den großen Winkel beim Drehen des Innenmessers von z.B. 180°, erhält man eine sehr günstige Schneidwirkung wie bei einer Schere in der günstigsten Lage. Diese Lage ist bei einer Schere mit dem hinteren Bereich zu vergleichen, denn dort schneidet eine Schere am besten. Damit werden auch die Kräfte beim Schneiden sehr stark reduziert, was sich auch auf den gesamten Aufbau der erfindungsgemäßen Vorrichtung günstig auswirkt (leichter, kompakt).

Zweckmäßig ist es erfindungsgemäß auch, wenn mehrere Schnittgehäuse unter Bildung einer gemeinsamen Achse für das Loch für das Abführen der ausgeschnittenen Restteile sowie einer gemeinsamen Achse für das Innenmesser und die Innenmesser verbindbar sind. Eingangs wurde schon ausgeführt, daß man sich überlegt hat, aus einem rechteckigen Plattenmaterial aus Kunststoff mit einer Dicke von z.B. 0,8 bis 1,5 mm, vorzugsweise 1,2 mm, eine Reihe von hintereinanderliegenden Packungen auf ein Mal so tiefzuformen und diese miteinander zu verbinden, daß sich als Produkt eine Reihe von z.B. sechs, acht oder zehn Packungen ergibt, die einstückig noch miteinander verbunden sind und an ihren Oberwänden eine durchgehende gerade Rippe haben. Diese Rippe wird in den unten offenen Schlitz der Reihe von Schnittgehäuse eingeschoben, und aus dieser langen geraden Rippe müssen zahlreiche Restteile ausgeschnitten werden, nämlich die richtigen Abschnitte für jede Oberwand jeder einzelnen Packung, so daß sich für jede Packung die beschriebene und gewünschte Kontur an der Oberwand ergibt. Die entsprechende Vielzahl der Schnittgehäuse ist miteinander verbindbar und bildet folglich die gemeinsame Achse für das Loch für das Abführen der ausgeschnittenen Restteile einerseits und bilden gleichzeitig auch eine gemeinsame Achse für das Innenmesser andererseits, von dem es dann je nach der Anzahl der Schnittgehäuse auch eine entsprechende Anzahl gibt. Es werden also mehrere Einheiten von Schnittgehäuse mit Innenmesser hintereinander angeordnet und miteinander verbunden, so daß sich die beschriebenen gemeinsamen Achsen durch die gesamte Reihe der Einheiten erstrecken. Es versteht sich, daß die Innenmesser ebenfalls miteinander zu verbinden sind, so daß praktisch ein Strang von drehbar anzutreibenden Innenmessern entsteht. Dieser Strang braucht dann beispielsweise nur von einer Seite her angetrieben zu werden. Wenn durch die gegenseitige Verbindung zweier benachbarter Innenmesser im Rahmen eines Kupplungsstückes oder dergleichen Abstände zwischen den einzelnen Schnittgehäusen entstehen, dann ist es verständlich ein leichtes, für die Bildung eines durchgehenden Loches die Schnittgehäuse im Bereich des Loches oben durch Zwischenrohre oder dergleichen zu verlängern bzw. die Lücke zu überbrücken.

Günstig ist es hierfür, wenn erfindungsgemäß das Abführloch für die ausgeschnittenen Restteile eine innen glattwandige Leitung ist, die an einem Ende mit einer Fördermittelzuführung und am anderen Ende mit einem Sammelbehälter in Verbindung steht. Führt man die zu beschneidenden Verpackungen reihenartig von unten an die entsprechend konturierten Schnittgehäuse so heran, daß die jeweils obere Rippe in den Schlitz ragt, dann ist es zweckmäßig und wird bei der hier betrachteten Ausführungsform auch so beschrieben, daß die gemeinsame Achse der miteinander verbundenen Innenmesser etwa horizontal verläuft. Entsprechend verläuft dann auch die Achse für das Loch für das Abführen der ausgeschnittenen Restteile etwa horizontal. Dann genügt die Schwerkraft für das Abführen der ausgeschnittenen oder ausgestanzten Restteile nicht mehr, sondern es muß vielmehr ein Fördermittel dafür sorgen, daß die an den einzelnen Einheiten oder Stationen ausgeschnittenen Restteile sofort auch abgeführt werden, bevor das Loch überfüllt ist. Hierfür dienen die vorstehend genannten Mittel, nämlich eine leitungsartige Zuführung für ein Fördermittel, für das man bei praktischen Versuchen in sehr günstiger Weise Luft verwendet. Die Luft bläst durch das gemeinsame Abführloch für die ausgeschnittenen Restteile von einer Seite zur anderen und schiebt die dort durch die muldenförmigen Aussparungen vom Innenmesser hochgetragenen Restteile längs der glattwandigen Leitung in Bewegungsrichtung der Luft bis zu einem Sammelbehälter.

Der Betrieb einer solchen Vorrichtung, wenn man insbesondere für jede Einheit ein Innenmesser mit nur zwei diametral gegenüberliegenden muldenförmigen Aussparungen verwendet, läßt sich fortlaufend und zuverlässig durchführen, wenn erfindungsgemäß das Innenmesser intermittierend um jeweils 180° weitergedreht wird. Ein Bearbeitungsschritt erfordert also die Zeit, bis das Innenmesser um 180° gedreht wurde. Ein abgeschnittenes Restteil wird in dieser Zeit vom Innenmesser dann in das Abführloch transportiert, und gleichzeitig steht die nächste, leere muldenförmige Aussparung über dem Schlitz des Schnittgehäuses, so daß die nächste Packungsreihe eingeführt und zum Stillstand gebracht werden kann, bevor die nächste Drehung um 180° erfolgt.

Bei vorteilhafter weiterer Ausgestaltung der Erfindung hat die äußere Grenzlinie jeder der zwei muldenförmigen Aussparungen im Innenmesser im Querschnitt die Form eines ersten Kreisbogens, hat weiterhin die äußere Grenzlinie des Loches zum Abführen der ausgeschnittenen Restteile im Querschnitt die Form eines zweiten Kreisbogens und ergibt die Summe der beiden Kreisbögen einen Vollkreis, wobei die Höhlung des Schnittgehäuses im Querschnitt kreisförmig derart ist, daß der Kreis der Höhlung den Vollkreis schneidet. Diese geometrischen Angaben sollen verdeutlichen, daß in das Volumen des Innenmessers von oben das Volumen des Loches in dem Schnittgehäuse hineinragt und von unten das Volumen des Schlitzes hineinragt. Mit anderen Worten ragt ein Teil des Schlitzes in die Höhlung des Schnittgehäuses hinein, wobei es sich hierbei um den übrigen Teil des Schlitzes handelt; und ein Teil des Abführloches für die ausgeschnittenen Restteile ragt in die Höhlung des Schnittgehäuses hinein, wenn man davon ausgeht, daß das Abführrohr im Querschnitt kreisförmig ist. Der sich beim Drehen ergebende Kreis des Innenmessers bzw. seiner äußeren Grenzlinie überdeckt also den Kreis des im Querschnitt kreisförmigen Abführrohres für die ausgeschnittenen Restteile.

Der durch die vorstehende Geometrie beschriebene Aufbau der erfindungsgemäßen Vorrichtung erlaubt eine erstaunliche Kompaktheit und eine Anordnung von effektiven Werkzeugen auf kleinstem Raum. Innerhalb kürzester Bewegungen kann auch eine ganze Reihe von hintereinander angeordneten Packungen mit jeweils komplizierter Kontur im Bereich ihrer Oberwand auf kleinstem Raum beschnitten werden. Es ist nicht eine sehr große Stanzeinrichtung notwendig, wie das beim Stand der Technik bisher erforderlich war mit entsprechenden Stützen, Trägern, Halterungen usw. Vom Antrieb der Vorrichtung sind auch nur gut beherrschbare Kräfte einzuführen, obgleich an der jeweiligen Schneid- bzw. Stanzstelle hohe Kräfte wirksam werden, wenn man an die Materialdicke von 1,2 mm und z.B. zwölf hintereinander angeordnete Packungen denkt, die im oberen Bereich jeweils zwei bis vier Restteile aufweisen, die abzuschneiden sind. Durch den kompakten Aufbau wird nur wenig Platz für die Vorrichtung erforderlich, so daß diese Formstanzvorrichtung gemäß der Erfindung auch als einzelne Bearbeitungsstation im Rahmen einer größeren Packungsmaschine denkbar ist. An jeder Packung sind beim Formstanzen einige Schnittlängen zu bearbeiten; und das gleichzeitig an einer Vielzahl von Packungen, so daß doch erhebliche Kräfte für die Gesamtbearbeitung zur Verfügung stehen müssen. Durch den günstigen Winkel bei der Drehung des Innenmessers können auf den erforderlichen Schnittwegen die notwendigen Kräfte erzeugt werden, ohne daß eingangsseitig ein zu aufwendiger Antrieb verlangt wird.

Zweckmäßig ist es gemäß der Erfindung, wenn alle Schnittgehäuse an einer gemeinsamen, geraden Trägerleiste befestigt sind, wenn auf der der Trägerleiste abgewandten Seite der Schnittgehäuse im Abstand von diesen ein gerader Förderer für die Werkstücke angeordnet ist und wenn der Schlitz sich in Richtung der Achse geradlinig durch die ganze Reihe der Schnittgehäuse erstreckt. Man kann die zu bearbeitenden Werkstücke, d.h. die Verpackungen, beispielsweise auf einem geraden, horizontal verlaufenden Obertrum eines Endlosförderers an die erfindungsgemäße Vorrichtung so heranfördern, daß man die teilweise zu beschneidende Rippe im Bereich der Oberwand der jeweiligen Packung in den nach unten offenen Schlitz des Schnittgehäuses hineinschiebt, und zwar Stück für Stück für die Vielzahl der hintereinander einstückig miteinander verbundenen Reihe von Packungen. Entsprechend liegt die oberste Kante der zu beschneidenden Rippe in dem Schlitz des Schnittgehäuses horizontal und in gleichbleibendem Abstand über dem gesamten geraden Förderer. Von oben umgreift beidseitig von dem Schlitz das Schnittgehäuse entsprechend der gewünschten Kontur die zu beschneidende Rippe mehr oder weniger tief oder auf breiten Bereichen, wobei die entsprechenden muldenförmigen Ausnehmungen der Innenmesser in gleicher Weise unterschiedlich tief oder breit die Rippe überdecken. Vor dem Eingriff, d.h. vor der Bewegung des Innenmessers kann die Rippe widerstandslos durch den offenen Schlitz eingeführt werden, so daß das Schnittgehäuse nicht stört, weil der Schnitt nach unten offen ist und die jeweiligen Innenmesser nicht stören, weil im Bereich des Schlitzes die muldenförmigen Ausnehmungen vorliegen. Dort, wo ein größeres Reststück von der Rippe der Verpackung abgeschnitten werden soll, ragt das Schnittgehäuse mit Innenmesser entsprechend tief bis an die Wurzel der Rippe hinunter, und dort, wo beispielsweise nichts von der Rippe abzuschneiden ist, ist das Schnittgehäuse bis über die Rippe zurückgezogen, und das Innenmesser bewegt sich ohne Eingriff an dieser stelle über die Rippe hinweg.

Durch die gerade Trägerleiste ist die gesamte Vorrichtung versteift, so daß alle Schnittgehäuse der gesamten Reihe einen festen Halt haben.

Günstig ist es gemäß der Erfindung auch, wenn die Innenmesser über Kupplungsstücke miteinander verbunden sind. Die Kupplungsstücke zwischen den Innenmessern sorgen für eine gegenseitige Verbindung. Die Kupplungsstücke gleichen die Lagedifferenzen zwischen den einzelnen Innenmessern und damit auch den Schnittgehäusen aus. Die Kupplungen zwischen den Innenmessern übertragen einerseits die Kräfte von einem Innenmesser zu dem nächsten in der langen Reihe, so daß ein Kräftefluß von einem Ende bis zum anderen in der gesamten Reihe ermöglicht wird. Andererseits kann sich dadurch eine gewisse Torsionswirkung ergeben, d.h. ein Kupplungsspiel ergibt vom einen Ende der Reihe bis zum anderen gewisse Zeitunterschiede, wenn die einzelnen Innenmesser mit der Rippe in Eingriff treten. Dieses Kupplungsspiel und diese Torsion haben den Vorteil, daß die Kräfte in der Reihe der hintereinander angeordneten Einheiten nicht alle gleichzeitig auftreten sondern sich etwas verteilen. Auch dies erleichtert den Aufbau und Betrieb der erfindungsgemäßen Vorrichtung.

Weitere Vorteile, Merkmale und Anwendungsmöglichkeiten der vorliegenden Erfindung ergeben sich aus der folgenden Beschreibung bevorzugter Ausführungsbeispiele in Verbindung mit den anliegenden Zeichnungen. Es zeigen:
- Figur 1: abgebrochen und etwas schematisiert eine Axialschnittansicht durch die Formstanzeinrichtung mit mehreren Einheiten, wobei die Schnittgehäuse hintereinander angeordnet sind und bei den letzten drei Einheiten auf der rechten Endseite darunterliegend Packungen eingeschoben und von einem Förderer gehalten gezeigt sind,
- Figur 2: eine Querschnittsansicht der Vorrichtung nach Figur 1 entlang der Linie II-II,
- Figur 3: eine Ansicht des Schnittgehäuses ohne Innenmesser, ohne Packung, ohne die Trägerleiste und vergrößert,
- Figur 4: eine Querschnittsansicht durch das Schnittgehäuse einer Einheit, wobei die Drehachse unten horizontal liegend gezeigt ist und im oberen Bereich die Mittelachse des Abführrohres für die ausgeschnittenen Restteile ebenfalls horizontal verlaufend dargestellt ist,
- Figur 5: eine Schnittansicht durch das Schnittgehäuse entlang der Drehachse, d.h. entlang der Linie V-V der Figur 4,
- Figur 6: eine Draufsicht auf das Schnittgehäuse einer Einheit, wie man dieses sieht, wenn man in Figur 3 gemäß dem Pfeil VI von oben nach unten blickt,
- Figur 7: eine teilweise aufgeschnittene Seitenansicht eines zweiteiligen Innenmessers mit den als Kupplung wirkenden Drehzapfen,
- Figur 8: eine vergrößerte, abgeschnittene Teilansicht einer Verbindungsstelle zwischen den zwei Teilen des Innenmessers der Figur 7,
- Figur 9: eine Ansicht des Innenmessers, wenn man dieses gemäß Pfeil IX in Figur 7 von rechts nach links betrachtet und
- Figur 10: abgebrochene Seitenansichten von Packungsreihen, wobei die Figur 10a die bereits ausgestanzte Packungsreihe nach Verlassen der Vorrichtung zeigt und Figur 10b die zu bearbeitende Packungsreihe zeigt, bei welcher die auszuschneidenden Restteile noch im oberen Bereich vorhanden sind.

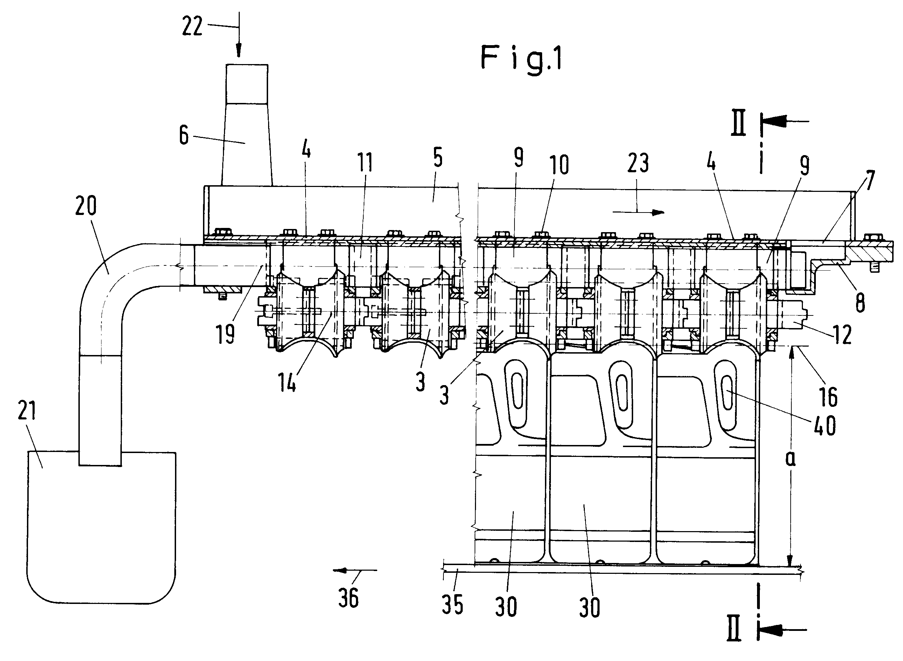

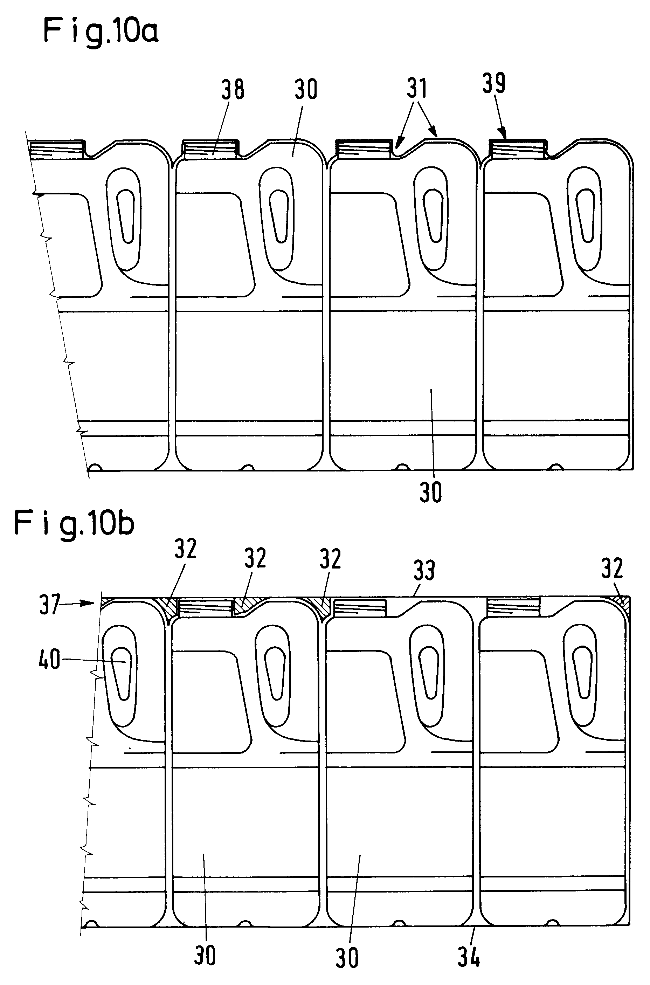

Es wurde eingangs schon ausgeführt, daß die erfindungsgemäße Vorrichtung am besten in Verbindung mit der Herstellung von Flüssigkeitspackungen erläutert werden kann, weshalb beispielsweise als Produkt hier auf die Figuren 10a und 10b Bezug genommen wird, wo Reihen von Packungen 30 (dies sind also die Werkstücke, die auch teilweise erwähnt werden) aneinanderhängend gezeigt sind. In Figur 10b sieht man, wie die äußere Grenzlinie über die gesamte Reihe von Packungen 30 hinweg ein Rechteck vorgibt, wobei hier nur die Bereiche der Oberwand 31 der jeweiligen Packung 30 von Interesse sind. Nur in dem Bereich der Oberwand 31 sollen die in Figur 10b in der linken Hälfte oben und auch ganz rechts oben die schraffiert dargestellten Restteile 32 ausgeschnitten werden. Man erkennt, daß die obere äußere Linie 33 des gesamten Zuschnittes parallel und in gleichem Abstand von der unteren äußeren Linie 34 des Zuschnittes verläuft. In dieser Form wird die Reihe der Packungen 30 gemäß Figur 1 auf den Förderer 35 gestellt und beispielsweise in Richtung des Pfeiles 36 unter die Vorrichtung so heranbewegt, daß die insgesamt mit 37 bezeichnete Rippe so in den unten offenen Schlitz 2 des Schnittgehäuses 1 eingeschoben wird, daß die oberste Kante 33 dieser Rippe 37 im Abstand a von der Oberfläche des Förderers 35 zu liegen kommt.

Wenn die einzelnen Restteile 32 durch die noch zu beschreibende Vorrichtung ausgeschnitten bzw. abgestanzt sind, ergibt sich die in Figur 10a gezeigte Kontur der Reihe von Packungen 30, bei welcher der hochstehende Kragen 38 der allgemein mit 39 bezeichneten Ausgießeinrichtung mit seinem Außengewinde dargestellt ist.

Die Formstanzvorrichtung besteht aus einer Vielzahl von miteinander in einer geraden Reihe verbundenen Einheiten entsprechend der Anzahl der zu bearbeitenden Packungen 30, wobei zu jeder Einheit ein Schnittgehäuse 1 mit dem unten angeordneten, nach außen, unten offenen Schlitz 2 und ein drehbares Innenmesser 3 gehört.

Gemäß Figur 1 ist über einer länglichen, geraden Trägerleiste 4 ein Sammelbalken 5 in Gestalt eines Vierkantrohres angeschweißt, durch welches die Trägerleiste 4 versteift wird. Der Sammelbalken ist rohrförmig, d.h. hohl und erstreckt sich über alle Einheiten mit Schnittgehäuse 1 und Innenmesser 3 hinweg und ist an seinen beiden entgegengesetzten Enden verschlossen, hat aber ein Zugangsrohr 6 als Anschluß an einem der beiden Enden (in Figur 1 links) und einen Austrittsdurchgang 7 am gegenüberliegenden Ende in Figur 1 rechts in der Trägerleiste 4. Hier ist ein Schlußstück 8 an die Enden der Reihe vom Schnittgehäuse 1 auf der Höhe eines Loches 9 angebracht, das sich im oberen Bereich des Schnittgehäuses 1 befindet, wie aus den Figuren 1 bis 4 deutlich erkennbar ist.

Mittels Schrauben 10 ist von unten an die Trägerleiste 4 eine Reihe von Schnittgehäusen 1 angeschraubt, die über Rohrstücke 11 und Kupplungsstücke 12 miteinander bzw. in Figur 1 am rechten Ende mit einem nicht dargestellten Antrieb verbunden sind. Im folgenden genügt die Beschreibung einer einzigen Einheit mit Schnittgehäuse 1 und Innenmesser 3, weil alle anderen Einheiten der Reihe gleich ausgestaltet sind.

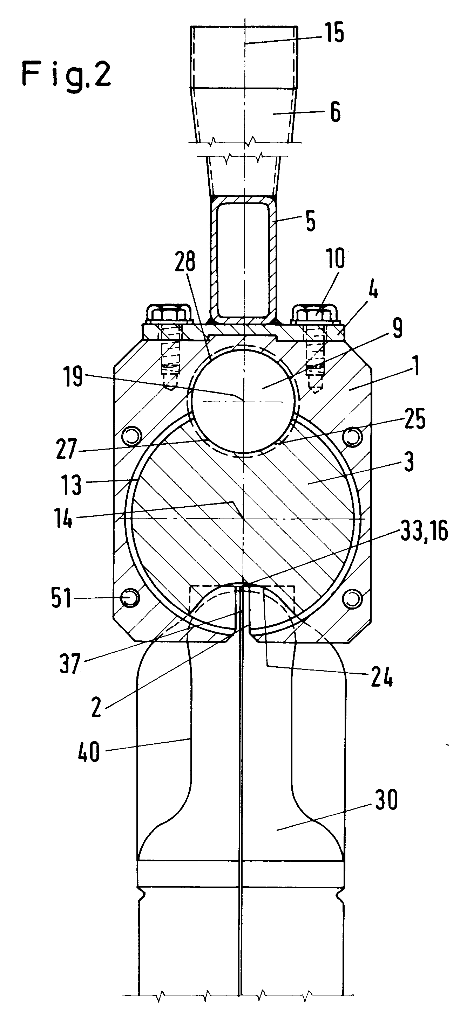

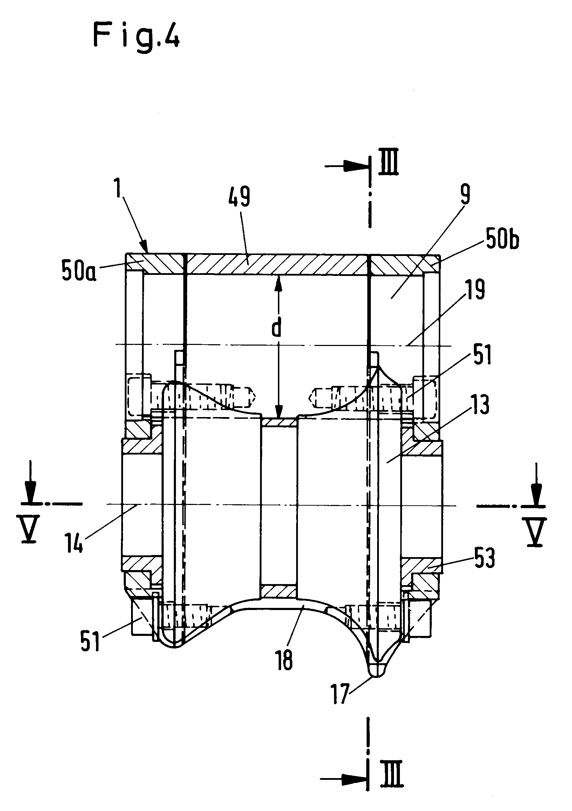

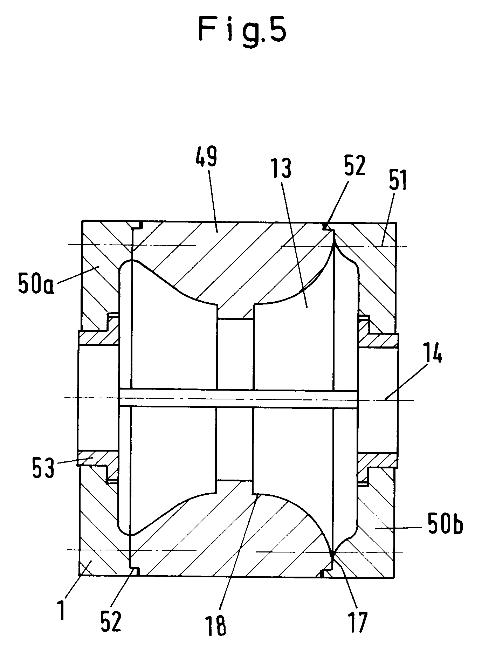

In dem in den Figuren 2 bis 5 dargestellten Schnittgehäuse 1 befindet sich eine Höhlung 13, in der ein um eine Achse 14 drehbares Innenmesser 3 drehbar angeordnet ist. Zu der der Trägerplatte 4 gegenüberliegenden Seite, d.h. nach unten hin, ist das Schnittgehäuse 1 mit einem nach außen offenen Schlitz 2 versehen, der geradlinig in Richtung der Achse 14 verläuft, vorzugsweise wie bei der Darstellung der Figur 1 horizontal. Würde man das Schnittgehäuse 1 schneiden und entlang der in Figur 2 gezeigten vertikalen, strichpunktierten Mittellinie 15 schneiden, dann hätte man für die Gesamtvorrichtung die Ansicht der Figur 1 und für das Schnittgehäuse 1 allein die Ansicht der Figur 4. Man erkennt, daß in Richtung des Pfeiles 36, der parallel zur Drehachse 14 liegt, die Außenkontur des Schnittgehäuses 1 dem Schneidrand entlang der Rippe 37 am Oberboden 31 der Packung 30 entspricht. Man sieht in Figur 1, wie zweieinhalb Packungen in einer Reihe nebeneinander unter den darüber befindlichen Einheiten stehen. Das Innenmesser 3 befindet sich bogenförmig über der Erhöhung hinten über der Griffmulde der Packung, die mit 40 bezeichnet ist. Im vorderen Bereich befindet sich die Ausgießeinrichtung 39, vor welcher in Richtung des Pfeiles 36 gesehen das radial große rechte Ende des Innenmessers 3 der nächstfolgenden Einheit den Schnitt des Restteiles 32 besorgt. Die Oberkante 33 der durch Schnitte bzw. Stanzungen zu bearbeitenden Rippe 37 der jeweiligen Packung 30 liegt dicht neben der oberen, inneren Kante 16 des geraden Schlitzes 2, und diese Kante bleibt über die in Richtung des Pfeiles 36 gemessene Länge des Schnittgehäuses 1 hinweg bestehen, wie durch eine gestrichelte Linie 16 in Figur 1 angedeutet ist, die folglich in immer gleichbleibendem Abstand a von der oberen Fläche des Förderers 35 horizontal verläuft. Daraus folgt, daß der Schlitz 2 je nach der radialen Tiefe des auszuschneidenden Restteiles 32 mehr oder weniger tief ist. Wegen der Rotationssymmetrie der Höhlung 13 kann man gleichzeitig die Figuren 4 und 5 betrachten und dort beispielsweise von einem Punkt 17 mit radial größter Entfernung von der Achse 14 zu einem Punkt 18 nach links wandern, an welchem der gesamte Durchmesser der Höhlung 13 erheblich kleiner ist. An dieser radial kleinen Stelle ist der Schlitz 2 auf eine Tiefe 0 geschrumpft, d.h. hier wird die Oberkante 33 nicht geschnitten.

Das Schnittgehäuse 1 weist aber auf der bezüglich der Achse 14 diametral gegenüberliegenden Seite (gegenüber dem Schlitz 2) ein Loch 9 auf, welches bei der hier gezeigten Ausführungsform als Bohrung ausgeführt ist mit dem Mittelpunkt 19, welcher in der in den Figuren 1 und 4 gezeigten Darstellung als strichpunktierte Mittelachse dieses Rohres 9 zu sehen ist. Diese Mittelachse 19 ist ebenfalls geradlinig und verläuft horizontal in gleichbleibendem Abstand zur Drehachse 14 für das Innenmesser 3. Ein Rohrstück 11 (Figur 1) verbindet jeweils zwei benachbarte Schnittgehäuse 1 im Bereich dieses Loches 9, welches dadurch über die gesamte Reihe der Einheiten geradlinig wird mit glatten Innenwandungen. Das Loch 9 bildet mit den anderen Löchern 9 und den Zwischenrohrstücken 11 eine gerade Rohrleitung, die gemäß Figur 1 am Ablaufende über einen Krümmer 20 in einen Sammelbehälter 21 führt. Auf der aufstromigen Seite durch den Austrittsdurchgang 7 in der Trägerleiste 4 eintretende Förderluft kann durch die Reihe von Löchern 9 mit ihrem Durchmesser d in Richtung des Pfeiles 36 durch die Leitung geblasen werden und dabei vorhandene Restteile 32 mitnehmen und über den Krümmer 20 letztlich in den Sammelbehälter 21 befördern. Die Zuluft kommt über den Zuführstutzen 6 in Richtung des Pfeiles 22 von oben in den Sammelbalken 5 an dessen linkem Ende hinein und strömt dann in Richtung des Pfeiles 23 nach rechts bis zu dem Austrittsdurchgang 7.

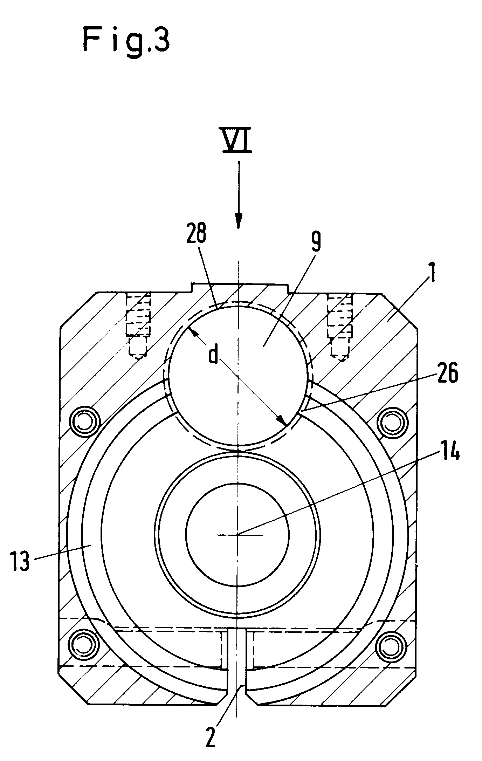

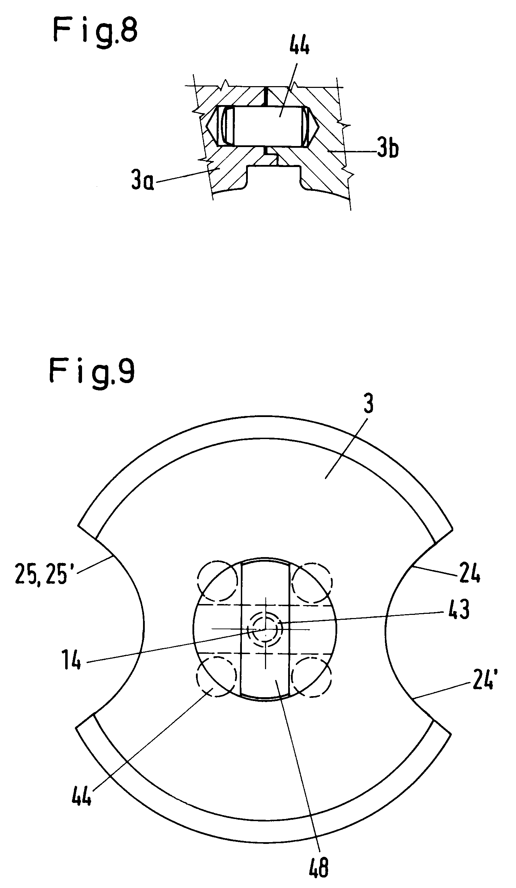

Jedes Innenmesser 3 weist gemäß Darstellung der Figuren 2 und 9 auf diametral gegenüberliegenden Seiten muldenförmige Aussparungen 24, 25 auf, die zwar gleich ausgeführt sind, von denen aber die Aussparung unten im Bereich des Schlitzes 2 mit 24 und zur besseren Beschreibung auf der gegenüberliegenden Seite mit 25 bezeichnet ist. Figur 3 zeigt, daß auch die Höhlung 13 in ihrem oberen Bereich mit einer solchen zusätzlichen muldenförmigen Aussparung 26 versehen sein muß, damit das Rohr 9 auf diese Weise innen glatte zylindermantelförmige Oberflächen haben kann.

Betrachtet man Figur 9, so kann man dort die äußere Grenzlinie der muldenförmigen Aussparung 24 mit 24' bezeichnen und auf der gegenüberliegenden Seite die äußere Grenzlinie der anderen Aussparung 25 mit 25' bezeichnen. Man sieht in Verbindung mit den Figuren 2 und 3, daß jede dieser Grenzlinien 24' und 25' im Querschnitt nach Figur 9 die Form eines ersten Kreisbogens hat, der in Figur 2 mit 27 bezeichnet ist. Dieser erste Kreisbogen 27 befindet sich nur unten, weil er gleichzeitig die Kante der Aussparung 25 ist. Andererseits hat aber auch das Loch 9 eine äußere Grenzlinie 28, die im Querschnitt der Figur 2 als zweiter Kreisbogen 28 zu erkennen ist. Beide Kreisbögen 27 und 28 zusammen ergeben den Vollkreis, wie er in Figur 2 zu erkennen ist. Dieser Vollkreis zieht sich auch durch das Schnittgehäuse 1, wie man in Figur 3 sieht, nur daß dort die äußere Grenzlinie 28 des Loches 9 durch eine entsprechende Ausnehmung im Schnittgehäuse 1 zum Vollkreis fortgesetzt wird. Dieser Vollkreis dringt also in die Höhlung 13 einerseits und in das Innenmesser 3 andererseits ein.

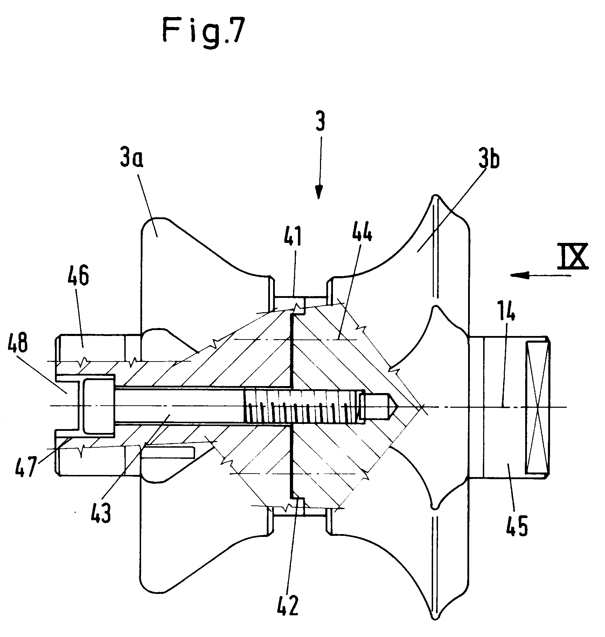

Das vorstehend beschriebene und in Figur 7 dargestellte Innenmesser 3 besteht aus zwei in Richtung der Achse 14 hintereinander befestigten Teilen 3a und 3b, welche durch eine Distanzhülse 41 voneinander getrennt sind, andererseits über eine Zentrierung 42 und mit Hilfe der mittig angeordneten Halteschraube 43 verbunden sind. Vier Mitnehmerbolzen 44, die in Achsrichtung in Figur 9 angedeutet sind und in Figur 7 durch die strichpunktierten Achsen angedeutet sind, dienen ebenfalls der Zentrierung, Mitnahme und Verbindung der beiden Teile 3a und 3b. Einer der Mitnehmerbolzen 44 ist genauer in Figur 8 herausgezeichnet.

Am rechten Ende der Figur 7 weist das Teil 3b des Innenmessers 3 einen Drehzapfen 45 auf, während das gegenüberliegende Teil 3a des Innenmessers 3 einen sich entgegengesetzt und ebenfalls in Richtung der Achse 14 erstreckenden Zapfen 46 trägt mit einer Ausnehmung 47, in welche einerseits die Halteschraube 43 eingelegt und ihr Kopf aufgenommen wird, andererseits die Kupplung 48 des nächstfolgenden Innenmessers 3 aufgenommen werden kann, wie man auch in der Draufsicht der Figur 9 gemäß Pfeil IX in Figur 7 sieht. Damit sind die einzelnen Innenmesser 3 miteinander gekoppelt und durch die mehrteilige Ausführung leichter herzustellen.

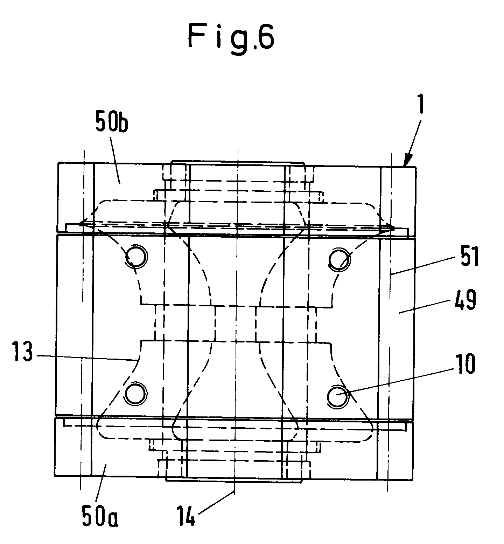

Das Schnittgehäuse 1 ist in Richtung der Achse 14 ebenfalls dreiteilig ausgeführt, wie man anhand der Figuren 4 bis 6 erkennt. Dadurch ist seine komplizierte Form leichter herstellbar. Das Mittelteil 49 des Schnittgehäuses 1 ist vorn und hinten je mit einem Lagerschild 50a und 50b abgedeckt. Vier Schrauben 51 halten die Lagerschilde am Mittelteil 49. Auch hier dienen Zentrierungen 52 dem korrekten Festlegen der drei Teile 49, 50a, 50b zueinander. Daß die Drehzapfen 45, 46 des Innenmessers 3 in Lagerschalen 53 laufen, ist an sich selbstverständlich.

Im Betrieb wird die in Figur 10b dargestellte Reihe von Packungen so eingeschoben, daß die Rippe 37 im Bereich des Oberbodens 31 in dem durch alle Schnittgehäuse 1 durchgehenden Schlitz 2 zu liegen kommen, wobei die obere Kante 33 noch eine Gerade ist und dicht unter dem oberen Ende 16 des Schlitzes 2 in gleichbleibendem Abstand a von dem Förderer 35 verläuft. Entsprechend der Anzahl der Einheiten mit den Innenmessern 3 besteht die Reihe aus einer gleichen Vielzahl von Packungen 30, die alle noch einstückig aneinanderhängen. Überall dort, wo das abzuschneidende Restteil 32 tief nach unten in Richtung auf den Förderer 35 reicht, vorzugsweise jeweils am Anfang und Ende der Rippe 37 einer Packung 30, liegt diese Rippe 37 unter einem Bereich des Schnittgehäuses 1 mit großem Durchmesser, z.B. in Figur 4 mit 17 bezeichnet. Wo praktisch nichts abzuschneiden ist, d.h. in dem erhöhten Bogenstück über der Griffmulde 40, liegt die Rippe 37 an Schnittgehäusen 1 (mit entsprechend geformtem Innenmesser 3), wo die Kontur radial nach innen zurückgenommen ist, wie in Figur 4 bei 18 dargestellt ist.

Das jeweilige Innenmesser 3 befindet sich jetzt im Zustand der Figur 2 und wird beispielsweise im Uhrzeigersinn um die Achse 14 nach rechts um 180° gedreht. Damit gelangt die obere Aussparung 25 auf den rechten Kreisbogen nach unten in die Position der Aussparung 24. Umgekehrt gelangt währenddessen die Aussparung 24 von unten in den Bereich nach oben, wo die Aussparung mit 25 bezeichnet ist. Auf diesem Weg schneidet die halbrunde Kante 24' der Aussparung 24 unter Scherwirkung gegen das stationär gehaltene Schnittgehäuse 1, welches als Außenmesser wirkt, das betreffende Restteil 32 in Gestalt eines kleinen Zipfels ab. Dieses Restteil 32 verbleibt in der Ausnehmung 24, während diese sich auf ihrem Weg nach oben in die Position der oberen Ausnehmung 25 befindet. Auf diese Weise wird das abgeschnittene Restteil 32 nach oben in den freien Raum des Loches 9 befördert.

Nach der erwähnten Drehung um 180° wird das Innenmesser 3 wieder zum Stillstand gebracht. Während die Rippe 37 nun die Gestalt gemäß Figur 10a erhalten hat, kann diese ausgestanzte Reihe von Packungen gemäß Figur 10a aus dem Schlitz 2 in Richtung des Pfeiles 36 mit dem Förderer 35 heraustransportiert werden. Der Stanz- bzw. Ausschneidevorgang ist für diese Gruppe von Packungen 30 beendet. Eine neue Gruppe von Packungen in der Gestalt der Figur 10b wird dann in den Schlitz 2 eingeladen.

Gleichzeitig befördert die durch den Austrittsdurchgang 7 in das Loch 9 eintretende Luft alle in den oben befindlichen, muldenförmigen Aussparungen liegenden Restteile 32 entlang der Mittelachse 19 der sich dadurch gebildeten Leitung, und diese Restteile 32 werden dann durch den Krümmer 20 in den Sammelbehälter 21 gefördert. Die gesamte, aus den einzelnen Löchern 9 gebildete Leitung mit ihrer Längsmittelachse 19 ist danach wieder leer und zur Aufnahme neuer Restteile 32 bereit. Auf diese Weise können keine Abfallteile in den Maschinenbereich oder gar in die Packung 30 fallen.

Der beschriebene Schneidvorgang erfolgt für alle Einheiten bzw. alle Innenmesser 3 im wesentlichen gleichzeitig, durch Toleranzen oder Schlupf gegebenenfalls mit geringer Zeitdifferenz. Die halbrunde Aussparung 24 wirkt wie ein Messer und schneidet gegen die Rippe 37, wobei die Kante 24' gegen das stationäre Schnittgehäuse 1 schneidet. Während der Bewegung der Aussparung 24 im Uhrzeigersinn um 180° nach oben wird zwar das Restteil 32 mitgenommen (bzw. mehrere Restteile 32), währenddessen aber bewegt sich die leere Ausnehmung 25 von oben nach unten, so daß nach dem Stillstand der Raum am Schlitz 2 unten wieder leer ist.

### Bezugszeichenliste

- 0: Tiefe
- 1: Schnittgehäuse
- 2: Schlitz
- 3: Innenmesser
- 3a, 3b: Teile
- 4: Trägerleiste
- 5: Sammelbalken
- 6: Zugangsrohr, Zuführstutzen
- 7: Austrittsdurchgang
- 8: Schlußstück
- 9: Rohr, Loch
- 10: Schrauben
- 11: Zwischenrohrstücke
- 12: Kupplungsstücke
- 13: Höhlung
- 14: Drehachse
- 15: Mittellinie
- 16: obere innere Kante
- 17, 18: Punkte
- 19: Mittelpunkt, -achse
- 20: Krümmer
- 21: Sammelbehälter
- 22, 23: Pfeile
- 24, 25: Aussparungen
- 24', 25': halbrunde Kanten, Grenzlinien
- 26: Aussparung
- 27: Kreisbogen
- 28: Kreisbogen, Grenzlinie
- 30: Packungen
- 31: Oberboden
- 32: Restteil
- 33: Oberkante
- 34: untere äußere Linie
- 35: Förderer
- 36: Pfeil
- 37: Rippe
- 38: Kragen
- 39: Ausgießeinrichtung
- 40: Griffmulde
- 41: Distanzhülse
- 42: Zentrierung
- 43: Halteschraube
- 44: Mitnehmerbolzen
- 45, 46: Drehzapfen
- 47: Ausnehmung
- 48: Kupplung
- 49: Mittelteil
- 50a, 50b: Lagerschild
- 51: Schrauben
- 52: Zentrierungen
- 53: Lagerschalen
- a: Abstand
- d: Durchmesser
- IX: Pfeil

## Patentansprüche

1. Vorrichtung zum Ausschneiden und Sammeln von Restteilen (32) aus Randbereichen wenigstens teilweise plattenförmiger Werkstücke (30), vorzugsweise thermogeformter Packungen (30) aus Kunststoff, mit einem an einer Halterung (4,5) angebrachten, durch Antriebsmittel antreibbaren Schneidmesser (1, 3) und mit Einrichtungen (9, 20, 21) zum Sammeln und Abführen der ausgeschnittenen Restteile (32), dadurch gekennzeichnet, daß in der Höhlung (13) eines als stationäres Außenmesser wirkenden Gehäuses (1) ein um eine Achse (14) drehbares Innenmesser (3) mit zwei auf diametral gegenüberliegenden Seiten angebrachten muldenförmigen Aussparungen (24, 25) angeordnet ist, daß das Schnittgehäuse (1) auf seiner einen Seite einen nach außen offenen und in Richtung der Achse (14) geradlinig verlaufenden Schlitz (2) und auf der gegenüberliegenden Seite ein Loch (9) aufweist und daß das Loch (9) und der Schlitz (2) mit der Höhlung (13) in Verbindung stehen.

2. Vorrichtung nach Anspruch 1, dadurch gekennzeichnet, daß das Innenmesser (3) aus wenigstens zwei in Achsrichtung (14, 36) hintereinander befestigten Teilen (3a, 3b) besteht, deren im Axialschnitt gesehene Außenkontur der Außenkontur des Schnittgehäuses (1) und der der Grenzlinie der auszuschneidenden Restteile (32) des Werkstückes (30) entspricht.

3. Vorrichtung nach Anspruch 1 oder 2, dadurch gekennzeichnet, daß mehrere Schnittgehäuse (1) unter Bildung einer gemeinsamen Achse (19) für das Loch (9) für das Abführen der ausgeschnittenen Restteile (32) sowie einer gemeinsamen Achse (14) für das Innenmesser (3) und die Innenmesser (3) verbindbar sind.

4. Vorrichtung nach einem der Ansprüche 1 bis 3, dadurch gekennzeichnet, daß das Abführloch (9) für die ausgeschnittenen Restteile (32) eine innen glattwandige Leitung ist, die an einem Ende mit einer Fördermittelzuführung (7) und am anderen Ende mit einem Sammelbehälter (21) in Verbindung steht.

5. Vorrichtung nach einem der Ansprüche 1 bis 4, dadurch gekennzeichnet, daß das Innenmesser (3) intermittierend um jeweils 180° weitergedreht wird.

6. Vorrichtung nach einem der Ansprüche 1 bis 5, dadurch gekennzeichnet, daß die äußere Grenzlinie (24', 25') jeder der zwei muldenförmigen Aussparungen (24, 25) im Innenmesser (3) im Querschnitt die Form eines ersten Kreisbogens (27) hat, daß die äußere Grenzlinie (28) des Loches (9) zum Abführen der ausgeschnittenen Restteile (32) im Querschnitt die Form eines zweiten Kreisbogens (28) hat und daß die Summe der beiden Kreisbögen (27, 28) einen Vollkreis (27 + 28) ergibt, wobei die Höhlung (13) des Schnittgehäuses (1) im Querschnitt kreisförmig derart ist, daß der Kreis der Höhlung (13) den Vollkreis (27 + 28) schneidet.

7. Vorrichtung nach einem der Ansprüche 1 bis 6, dadurch gekennzeichnet, daß alle Schnittgehäuse (1) an einer gemeinsamen, geraden Trägerleiste (4) befestigt sind, daß auf der der Trägerleiste (4) abgewandten Seite der Schnittgehäuse (1) im Abstand (a) von diesen ein gerader Förderer (35) für die Werkstücke (30) angeordnet ist und daß der Schlitz (2) sich in Richtung der Achse (14) geradlinig durch die ganze Reihe der Schnittgehäuse (1) erstreckt.

8. Vorrichtung nach einem der Ansprüche 1 bis 7, dadurch gekennzeichnet, daß die Innenmesser (3) über Kupplungsstücke (45, 46, 48) miteinander verbunden sind.
